# EUROPÄISCHE PATENTSCHRIFT

(11) **EP 1 233 888 B1**
(45) Veröffentlichungstag und Bekanntmachung des Hinweises auf die Patenterteilung: **02.11.2005**
(21) Anmeldenummer: 01971687.7
(22) Anmeldetag: 31.08.2001
(51) Int. Cl.: B60R 16/02

(54) **ELEKTRONISCHES SYSTEM FÜR EIN FAHRZEUG UND SYSTEMSCHICHT FÜR BETRIEBSFUNKTIONEN**
ELECTRONIC SYSTEM FOR A VEHICLE AND SYSTEM LAYER FOR OPERATIONAL FUNCTIONS
SYSTEME ELECTRONIQUE POUR VEHICULE, ET COUCHE DE SYSTEME POUR FONCTIONS DE FONCTIONNEMENT

(30) Priorität: 07.09.2000 DE 10044319
(43) Veröffentlichungstag der Anmeldung: 28.08.2002
(73) Patentinhaber: ROBERT BOSCH GMBH, 70442 Stuttgart (DE)
(72) Erfinder: HARMS, Klaus, 71665 Vaihingen (DE); KALLENBACH, Rainer, 71336 Waiblingen (DE); HERMSEN, Wolfgang, 73230 Kirchheim (DE); FOLKENDT, Werner, 74321 Bietigheim-Bissingen (DE); SCHUSTER, Thomas, 74336 Brackenheim (DE); KIND, Werner, 71706 Markgroeningen (DE); HUELSER, Holger, A-8010 Graz (AT); FOLKE, Reiner, 70806 Kornwestheim (DE); FREI, Rasmus, 74321 Bietigheim-Bissingen (DE); MAYER, Rainer, 71263 Weil der Stadt (DE)
(86) Internationale Anmeldenummer: PCT/DE2001/003360
(87) Internationale Veröffentlichungsnummer: WO 2002/022401

(56) Entgegenhaltungen:
- WO-A-00/09376
- DE-A- 19 709 319
- DE-A- 19 857 916
- GERETSCHLAEGER P ET AL: "Objektorientierte Entwicklung eingebetteter Echtzeitsysteme im Automobil" INTERNET CITATION, [Online] 28. Mai 1999 (1999-05-28), XP002182920 Gefunden im Internet: <URL:http://ist.unibw-muenchen.de/GROOM/OM ER/final/geretschlaeger.pdf> [gefunden am 2002-01-17]
- PACCARD E: "Technology for a new automotive era" REAL-TIME MAGAZINE, RT PUBLICATIONS, Juli 1999 (1999-07), Seiten 20-24, XP002182918 BEERSEL, BE ISSN: 1018-0303

## Beschreibung

### Stand der Technik

Die Erfindung betrifft ein elektronisches System für ein Fahrzeug und eine Systemschicht des elektronischen Systems gemäß den Oberbegriffen der unabhängigen Ansprüche.

Die Anzahl der elektronischen Systeme im Fahrzeug nimmt stetig zu. Eine Serieneinführung weiterer neuer elektronischer Fahrzeugsysteme ist absehbar. Da die Wirkungen der einzelnen Systeme nicht unabhängig voneinander sind, kann ein wesentlicher Zusatznutzen aus Synergien eines Systemverbunds im Fahrzeug erschlossen werden. Zur Bewältigung der Komplexität eines solchen Systemverbunds im Fahrzeug ist in dem SAE-Paper 980200 "CARTRONIC - An Open Architecture for Networking the Control Systems of an Automobile", welches auf dem internationalen Kongress in Detroit, Michigan am 23.02.1998 bekannt gemacht wurde, ein Systemkonzept als technische Grundlage für die durchgängige Implementierung eines Systemverbunds elektronischer Fahrzeugsysteme dargestellt. Das darin vorgestellte Konzept zeigt eine offene Steuerungsarchitektur für das komplette Fahrzeug und offenbart die Merkmale des Oberbegriffs von Anspruch 1. Diese Steuerungsarchitektur lasst sich auf ein elektronisches Fahrer-Fahrzeug-System portieren, welches dann aus Komponenten zur Durchführung von Steuerungsaufgaben bei dem Fahrzeug, wie in der DE 41 11 023 A1 (US 5,351,776) gezeigt, besteht. Diese Steuerungsaufgaben betreffen dabei wenigstens die Fahrzeugbewegung und den Antriebsstrang, wobei Komponenten enthalten sind, die das Zusammenwirken der Komponenten für die Steuerungsaufgaben koordinieren. Dabei sind die Komponenten im Sinne einer Hierarchie, ausgerichtet an der Fahrzeugtopologie, in mehreren Ebenen angeordnet, wobei die wenigstens eine Koordinationskomponente einer Hierarchieebene bei der Umsetzung des Fahrerwunsches in ein entsprechendes Betriebsverhalten auf die Komponenten der nächsten Hierarchieebene und damit ein Untersystem des Fahrer-Fahrzeug-Systems unter Bereitstellung des jeweils von der höheren Hierarchieebene geforderten Verhaltens für das Untersystem zugreift. Dabei werden wenigstens Koordinationskomponenten für das Gesamtfahrzeug, den Antriebsstrang und die Fahrzeugbewegung unterschieden, wobei jedes der Untersysteme seine Subsysteme selbst koordiniert.

Im Allgemeinen wird ein solches Systemkonzept gemäß oben genanntem Stand der Technik auf einem allgemeinen bzw. standardisierten Echtzeitbetriebssystem aufgesetzt. Ein solches Standardbetriebssystem ist beispielsweise ERCOS oder OSEK bzw. OSEK/VDX. OSEK/VDX ist beispielsweise in der Binding Specification, Version 1.0 vom 28.07.2000 beschrieben und bildet mit seinen Schnittstellen für die Elektronik im Kraftfahrzeug als offenes System die Grundlage für ein aufzusetzendes Systemkonzept. Ein vergleichbares Echtzeitbetriebssystem ist, wie oben beschrieben, ERCOS, welches in der DE 195 00 957 A1 dargestellt ist.

Bis heute ist es üblich, aufsetzend auf dem Echtzeitbetriebssystem zur Steuerung von Betriebsabläufen eines Fahrzeugs eingebettete Softwarelösungen einzusetzen. Dabei werden applikationsspezifische Funktionen, Systemgrundfunktionen, Kernfunktionen sowie die entsprechende Treibersoftware, also die spezifischen Basisfunktionen einerseits mit den unterschiedlichen Betriebsfunktionen und Teilbetriebsfunktionalitäten andererseits, welche das eigentliche Betriebsverhalten des Fahrzeugs bestimmen, verwoben. Notwendige bzw. gewünschte Veränderungen von Funktionen oder das nachträgliche Einfügen von Funktionen lassen bei solchermaßen verwobenen Softwarelösungen sehr komplexe Systemausbildungen, insbesondere bezüglich der Schnittstellen, entstehen.

Diese Situation, insbesondere im Sinne einer einfachen Funktionsänderung bzw. einem einfachen Hinzufügen neuer Funktionen soll nun im Weiteren erfindungsgemäß optimiert werden.

### Vorteile der Erfindung

Die durch das Systemkonzept im SAE-Paper 980200 geschaffenen Voraussetzungen hierzu sollen im Weiteren erfindungsgemäß durch die klare Trennung von Betriebs- und Basisfunktionen und die Einführung einer Systemschicht mit offener Schnittstellenfunktion optimiert werden. Dabei sind die Inhalte der DE 41 11 023 A1 sowie des SAE Papers 980200 ausdrücklich Grundlage für diese hier weitergehende Erfindung.

Dabei geht die Erfindung von einem elektronischen System für ein Fahrzeug bzw. von einer Systemschicht des elektronischen Systems aus, wobei das elektronische System erste Komponenten zur Durchführung von Steuerungsaufgaben bei Betriebsabläufen des Fahrzeugs und zweite Komponenten, welche ein Zusammenwirken der ersten Komponenten zur Durchführung der Steuerungsaufgaben koordieren, umfasst. Die ersten Komponenten führen dabei die Steuerungsaufgaben durch Verwendung von Betriebsfunktionen und Basisfunktionen aus.

Vorteilhafter Weise wird das System derart aufgebaut, dass Basisfunktionen und Betriebsfunktionen bzw. Teilbetriebsfunktionalitäten (Im Weiteren als Betriebsteilmodule bezeichnet) klar voneinander getrennt werden, wobei die Basisfunktionen in einer Basisschicht zusammengefasst sind. Zweckmäßiger Weise wird dann die Systemschicht auf der Basisschicht, welche die Basisfunktionen enthält, aufgesetzt. Die Systemschicht enthält dabei wenigstens zwei der zweiten Komponenten, welche das Zusammenwirken der Steuerungskomponenten koordinieren. Vorteilhafter Weise ist dabei in bzw. bei der Systemschicht wenigstens eine offene Schnittstelle zu den Betriebsfunktionen vorgesehen, wodurch die Systemschicht die Basisfunktionen mit beliebigen Betriebsfunktionen derart verbindet, dass die Betriebsfunktionen modular eingebunden und/oder verwendet bzw. modular an das elektronische System angebunden werden können.

Damit werden vorteilhafter Weise die Betriebsfunktionen bzw. Betriebsteilmodule modular einbindbar in das elektronische System, wiederverwendbar und jederzeit austauschbar bzw. veränderbar.

Weiterhin von Vorteil ist, dass dadurch eine wohldefinierte Schnittstelle durch die Systemschicht festgelegt wird, um im Rahmen der Steuergerätesoftware für beliebige Betriebsfunktionen eine Variantenbildung sowie Erweiterungen bzw. Veränderungen der Funktionalität, insbesondere durch Betriebsteilmodule, sogenannte Plug-In's, zu ermöglichen.

In einer sinnvollen Ausgestaltung kann damit ein System, welches sich bereits in Serie bzw. im Einsatz oder Betrieb befindet, jederzeit weiter entwickelt, verändert und/oder durch Hinzufügung neuer Betriebsfunktionen erweitert werden.

Damit können sinnvoller Weise Steuerungsaufgaben bzw. spezifische Leistungsmerkmale eines elektronischen Systems sehr flexibel und individuell entworfen, entwickelt bzw. implementiert werden.

Zweckmäßiger Weise werden zusätzlich Überwachungsfunktionen bezüglich der Betriebsfunktionen und/oder der Betriebsteilmodule in der Systemschicht eingebunden.

Dadurch ergeben sich die Vorteile der Modularisierung der Software- und Überwachungsfunktionalitäten und damit einhergehend die Möglichkeit, beispielsweise von Dritten erstellte Software mit geringem Aufwand in das elektronische System einzubinden. Dies erlaubt insbesondere auch, vorteilhafter Weise kundenspezifische Varianten ausschließlich innerhalb der Betriebsfunktionen bzw. der Betriebsteilmodule darzustellen, während die Systemschicht anwendungsunabhängig gestaltet werden kann.

Zweckmäßiger Weise umfasst die Systemschicht von den zweiten Komponenten wenigstens die bezüglich Koordinierung des Gesamtfahrzeug und bezüglich Koordinierung des Antriebsstranges und/oder bezüglich Koordinierung der Fahrzeugbewegung.

Die Betriebsfunktionen bzw. Betriebsteilmodule können vorteilhafter Weise vor und/oder während einer Compilierung und/oder vor und/oder während der Durchführung der Steuerungsaufgaben modular eingebunden und/oder verwendet werden.

Weitere Vorteile und vorteilhafte Ausgestaltungen ergeben sich aus der Beschreibung und den Ansprüchen.

### Zeichnung

Die Erfindung wird im Weiteren anhand der in der Zeichnung dargestellten Figuren erläutert.

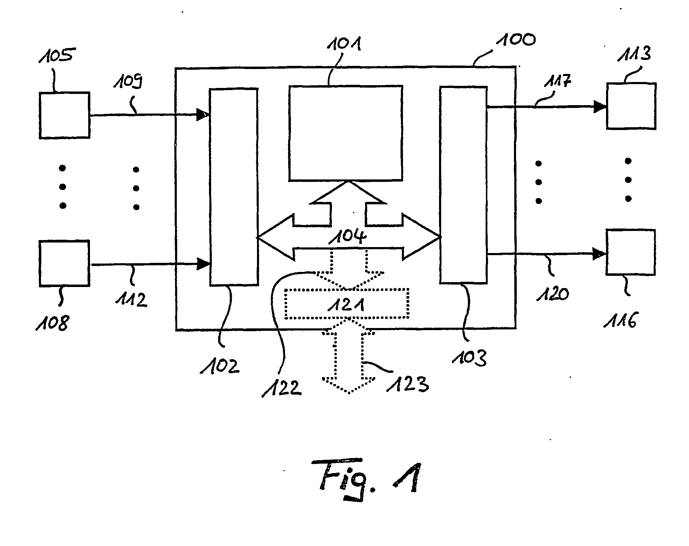

Dabei zeigt Figur 1 ein Übersichtsschaltbild einer Steuereinrichtung.

Figur 2 zeigt ein elektronisches System, insbesondere ausgebildet als eine auf die Elektronik des Fahrzeugs zu portierende Softwarearchitektur.

Figur 3 zeigt ein Ausführungsbeispiel des elektronischen Systems im Rahmen eines Antriebsstrangmanagements.

### Beschreibung der Ausführungsbeispiele

Figur 1 zeigt ein Blockschaltbild einer Steuereinrichtung zur Durchführung von Steuerungsaufgaben im Rahmen von Betriebsabläufen bei einem Fahrzeug. Die Steuereinrichtung steht dabei beispielsweise für Steueraufgaben in Verbindung mit Betriebsabläufen des Fahrzeugs im Rahmen einer Motorsteuerung (Benzin, Diesel, BDE, etc.), einer Bremsen- bzw. Fahrfunktionssteuerung (ABS, ASR, ESP, Brake by Wire, etc.), einer Getriebesteuerung, einer Steuerung für elektrische Lenkhilfen (z.B. Steer by Wire) sowie einer Steuerung für Systeme der Fahrzeugführung und/oder Rundumsicht (z.B. ACC), Karosseriesteuerung (z.B. Türschloss, Fensterheber, etc.), Energie- bzw. Bordnetzsteuerung, usw.

Dabei ist eine Steuereinheit 100 vorgesehen, welche als Komponenten eine Eingangsschaltung bzw. Eingangsschnittstelle 102 wenigstens eine Recheneinheit 101 und eine Ausgangsschaltung bzw. Ausgangsschnittstelle 103 aufweist. Ein Kommunikationssystem 104, insbesondere ein Bus-System, verbindet diese Komponenten zum gegenseitigen Datenaustausch. Der Eingangsschaltung 102 der Steuereinheit 100 werden Eingangsleitungen 109 bis 112 zugeführt, welche in einem bevorzugten Ausführungsbeispiel als Bus-System ausgeführt sind und über die der Steuereinheit 100 Signale zugeführt werden, welche zur Durchführung der Steuerungsaufgaben auszuwertende Betriebsgrößen repräsentieren. Diese Signale werden von Messeinrichtungen 105 bis 108 erfasst oder von anderen Steuereinheiten bzw. Steuereinrichtungen geliefert. Derartige Betriebsgrößen sind z.B. Fahrpedalstellung, Motordrehzahl, Motorlast, Abgaszusammensetzung, Motortemperatur, Getriebeübersetzung, Fahrgeschwindigkeit, Raddrehzahl, Lenkwinkel, Drehrate (Gearmoment), Abstand zum vorausfahrenden Fahrzeug oder Hindernis, usw. Über die Ausgangsschaltung 103 steuert bzw. regelt die Steuereinheit 103 Aktuatoren 113 bis 116 über Zuleitungen 117 bis 120 entsprechend der jeweiligen Anwendung der Steuereinrichtung.

Im Rahmen der Steuerung beispielsweise einer Antriebseinheit wird z.B. über die Ausgangsschaltung 103 die Leistung der Antriebseinheit geregelt. Über die Ausgangsleitungen 117 bis 120 werden im Rahmen der Steuerung der Leistung der Antriebseinheit die einzuspritzende Kraftstoffmasse, der Einspritz- bzw. Zündwinkel der Brennkraftmaschine sowie die Stellung wenigstens einer elektrisch betätigbaren Drosselklappe zur Einstellung der Luftzufuhr zur Brennkraftmaschine eingestellt. Auch hier sind die Ausgangsleitungen 117 bis 120 in einem bevorzugten Ausführungsbeispiel als Bus-System ausgeführt.

Dabei kann, symbolisch dargestellt durch die Elemente 121, 122 und 123, optional auch ein einziger Ein-/Ausgangsschaltkreis 121, insbesondere ein Bus-Controller mit Anbindung 122 an das Kommunikationssystem 104 und der externen Verbindung 123 zu Aktuatoren, weiteren Steuereinheiten oder Sensoren dargestellt werden.

Neben den geschilderten, die Eingangsgrößen liefernden entsprechenden Messsystemen sind weitere Steuereinrichtungen des Fahrzeugs bzw. Fahrzeugsysteme vorgesehen, welche der Eingangsschaltung 102 bzw. optional der Bus-Ankoppelschaltung 121 weitere Vorgabegrößen, beispielsweise Sollwertvorgaben, insbesondere Drehmomentsollwerte übermitteln. Im Rahmen einer Antriebssteuerung sind entsprechende Steuersysteme welche derartige Vorgabegrößen von z.B. Steuereinrichtungen (vgl. Aufzählung oben), liefern beispielsweise Antriebsschlupfregelungen, Fahrdynamikregelungen, Getriebesteuerungen, Motorschleppmomentregelungen, Geschwindigkeitsregler, Geschwindigkeitsbegrenzer, Fahrzeugführungsregler, usw.

Im Rahmen einer Brennkraftmaschinesteuerung werden über die dargestellten Stellpfade die Luftzufuhr zur Brennkraftmaschine, beim Otto-Motor der Zündwinkel der einzelnen Zylinder, die einzuspritzende Kraftstoffmasse, der Einspritzzeitpunkt und/oder das Luft-/Kraftstoffverhältnis usw. eingestellt. Neben den dargestellten Sollwertvorgaben, den externen Sollwertvorgaben, zu denen auch eine Sollwertvorgabe durch den Fahrer in Form eines Fahrerwunsches und beispielsweise eine Maximalgeschwindigkeitsbegrenzung gehören, sind interne Vorgabegrößen zur Steuerung beispielsweise der Antriebseinheit vorhanden, wie beispielsweise eine Drehmomentänderung einer Leerlaufregelung, eine Drehzahlbegrenzung, die eine entsprechende Vorgabegröße ausgibt, eine Drehmomentbegrenzung usw.

Damit ist angedeutet, welche unterschiedlichen Regelungs- und Steuerungsaufgaben in einem Kraftfahrzeug vorliegen und welche Steuersysteme bzw. Steuereinrichtungen als erste Komponenten verknüpft bzw. verwoben werden müssen. Durch eine intensivere Koordination dieser Steuerungsaufgaben bzw. der diese durchführenden ersten Komponenten als bisher gelangt man nun erfindungsgemäß zu einem stärker bzw. optimierteren systemorientierten Verhalten. Als Beispiel ist hier die Steuerung und Regelung des kompletten Antriebsstranges unter Einbeziehung sämtlicher Koordinationskomponenten (z.B. Gesamtfahrzeug, Fahrzeugbewegung, Antrieb), anstatt einzelner Aktionen von Motor und Getriebe mit gegenseitigem Datenaustausch. Damit ergibt sich die Möglichkeit, Veränderungen und Verbesserungen an Betriebsfunktionen, insbesondere auch an bzw. durch Betriebsteilmodule, sogenannte Plug-In's im Rahmen der Systemschicht vorzunehmen. Betriebsteilmodule variieren und/oder ergänzen bereits vorhandene Funktionalität bzw. Betriebsfunktionen, ohne die eigentliche Kernfunktionalität der Betriebsfunktion zu ändern. Sie stellen damit eine einfache Möglichkeit der Einflußnahme bzw. der Veränderung dar. Im Sinne der Erfindung, was bedeutet fahrzeugrelevante Funktionen gekapselt und portierbar, also übertrag- und wiederverwendbar darzustellen, um diese modular z.B. für unterschiedliche Steuereinrichtungen bzw. Steuerungskomponenten gleichermaßen anwenden zu können, können die Betriebsfunktionen und die Betriebsteilmodule gleichermaßen eingesetzt und auf der Systemschicht aufsetzend angewendet werden. Ein Unterschied liegt in dem jeweils beinhalteten Funktionsumfang begründet, welcher aber im Rahmen der Erfindung eine Gleichbehandlung nicht verbietet, weshalb Sie im Weiteren bezüglich des elektronischen Systems nicht unterschieden werden.

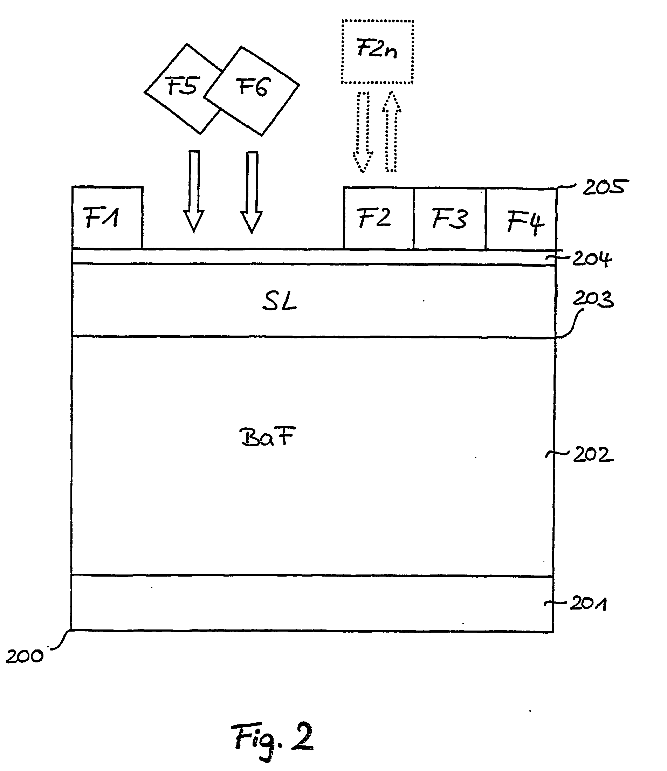

Dazu ist in Figur 2 ein elektronisches System 200 dargestellt, welches beispielsweise durch Implementierung einer Softwarearchitektur auf die der Fahrzeugtopologie entsprechende Hardware bzw. Elektronik realisiert werden kann. Die grundsätzliche Verbindung zu dieser Elektronik des Fahrzeugs liefert dabei die Schicht 201, welche das Standardbetriebssystem, eben beispielsweise OSEK bzw. ERCOS symbolisiert.

Erfindungsgemäß wird nun eine Trennung vollzogen zwischen Basisfunktionen bzw. Basisfunktionalität sowie Betriebsfunktionen bzw. entsprechender Funktionalität.

Die Basisfunktionen BaF werden in einer Basisschicht 202 auf das Echtzeitbetriebssystem 201 aufgesetzt. Solche Basisfunktionen sind beispielsweise Systemkernelfunktionen (CORE-functions), Treibersoftware und Grundsystemfunktionalität, also Funktionen die steuereinrichtungs- bzw. steuereinheitspezifisch sind. Auf diese Basisfunktionen BaF bzw. Grundfunktionen wird dann die Systemschicht 203 aufgesetzt, welche eine offene Schnittstelle 204 enthält bzw. über diese mit der Betriebsfunktionsschicht bzw. der Betriebsteilmodulschicht 205 in Verbindung steht. Im Gegensatz zu kompletten Betriebsfunktionen sind die Betriebsteilmodule wie bereits erwähnt so konzipiert, dass sie bereits vorhandene Funktionalität variieren oder Funktionalität ergänzen können. Beim Hinzufügen oder Austauschen von Betriebsteilmodulen (Plug-In's) wird die Kernfunktionalität aber nicht geändert.

In einer bevorzugten Ausführungsform werden Schnittstellen für die Betriebsteilmodule bei Betriebsfunktionen, für die solche Betriebsteilmodule zulässig sind, zur Verfügung gestellt, die einerseits für die Systemschicht die Schnittstelle der Plug-In-Funktionalität bereitstellen und andererseits nach außen die Schnittstelle zu den Plug-In's darstellen. Diese Schnittstellenfunktionalität kann in einer Plug-Interface Komponente in der Systemschicht dargestellt werden, welche dann bei Austausch eines Plug-In's notwendige Anpassungen erfährt.

Betriebsfunktionen oder Betriebsteilmodule F1 bis F4 sind dabei über die offene Schnittstelle, in welcher die vorgenannten Schnittstellenkomponenten enthalten sein können, realisiert. Damit können einfach weitere Betriebsfunktionen bzw. Betriebsteilmodule F5 und F6 aufsetzend auf der offenen Schnittstelle 204 angebunden bzw. in das elektronische System 200 eingebunden werden. Auch Änderungen vorhandener Funktionalität F2 können, wie angedeutet, durch Entfernen und Änderung in eine neue F2-Betriebsfunktionalität und erneutem Hinzufügen an die offene Schnittstelle 204 leicht erfolgen. Dadurch werden diese Fahrzeugfunktionen, also Betriebsfunktionen sehr einfach spezifisch, insbesondere fahrer- und fahrzeugspezifisch auslegbar und gleichzeitig modular und wiederverwendbar. Ebenso können sie jederzeit bezogen auf eine Compilierung oder auch die Durchführung von Steuerungsaufgaben eingebunden und/oder angebunden werden. D.h. das Einbinden der Funktionalität ist neben der Applikation auch im Betrieb einfach möglich.

In der Systemschicht SL bzw. 203 sind somit Funktionsschnittstellen zu Betriebsfunktionen bzw. Betriebsteilmodulen sowie Koordinationskomponenten entsprechend dem Stand der Technik abgelegt. Diese sind in der offenen Schnittstelle 204 in Figur 2 zusammengefaßt.

Gleichzeitig ist vorgesehen, Überwachungsfunktionen für die Funktionalitäten der Betriebsfunktionen bzw. der Betriebsteilmodule in die Systemschicht SL bzw. 203 zu implementieren. Diese Überwachungsfunktionen kontrollieren dann im Einzelnen die Plausibilität der an die Betriebsfunktionen bzw. Betriebsteilmodule gelieferten Eingangsinformationen, die Plausibilität der von diesen gelieferten Ausgangsinformationen sowie die Präsenz und das korrekte Funktionieren der von den Betriebsfunktionen bzw. Betriebsteilmodulen dargestellten Funktionalitäten.

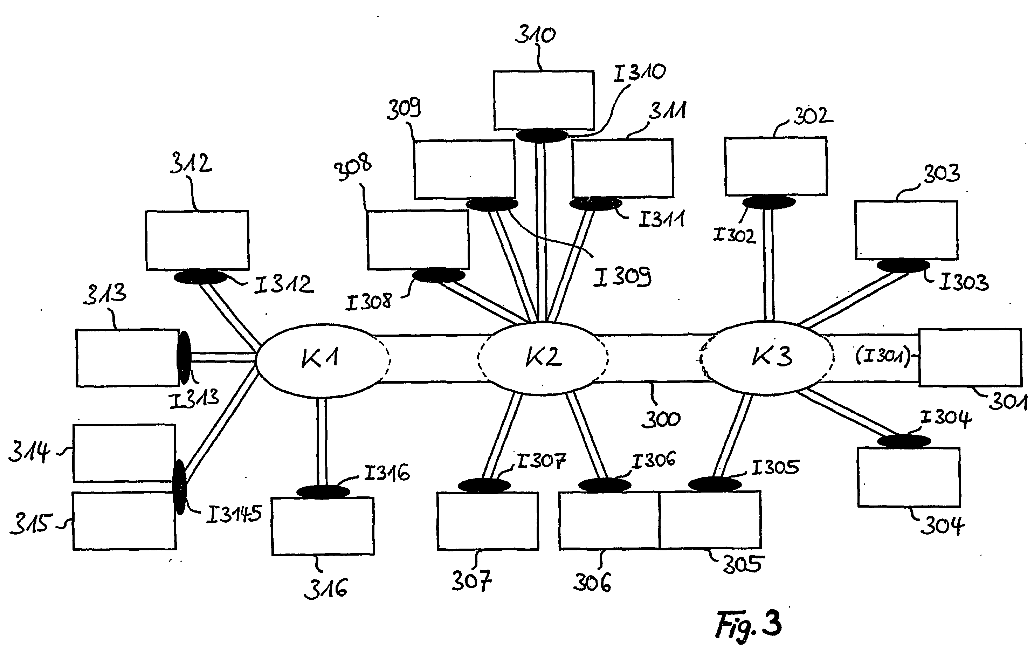

Ein solchermaßen realisiertes Antriebsstrangmanagement wird im Folgenden anhand Figur 3 als eine Ausführungsform näher erläutert. Die jeweilige Funktionalität bzw. das elektronische System ist dabei beliebig auf die im Fahrzeug enthaltene Elektronik verteilbar. Figur 3 zeigt dabei, bezogen auf den Stand der Technik, die Vereinigung der Koordinatoren K1, K2 und K3; mit K1 Koordinator Fahrzeugbewegung, K2 Koordinator Gesamtfahrzeug und K3 Koordinator Antriebsstrang in der Systemschicht 203. Diese Vereinigung der Koordinatoren in einer Schicht ist hier mit 300 dargestellt, da hierbei die Überwachungsfunktionen nicht dargestellt sind. Über eine Schnittstelle I301 ist das Motormanagement 301, welches beispielsweise in einer Ausführungsform in der noch nicht vorveröffentlichten DE 100 166 45 dargelegt ist, angekoppelt. Bei einer Trennung in motorabhängige und motorunabhängige Funktionalität können die motorabhängigen Funktionen als Basisfunktionen bzw. Grundfunktionen eingestuft werden, wodurch die matorunabhängigen, übergeordneten Fahrfunktionen keine Rücksicht auf die motorspezifische Auswahl der Stellpfade zur Umsetzung ihrer Anforderung nehmen müssen. Wird eine andere Einteilung bezüglich der Grundfunktionen vorgenommen, so wird I301 als Standardschnittstelle vorgesehen und das Motormanagement kann in den Bereich der Plug-In Funktionalität gelangen.

Die Implementierung eines solchen Antriebsstrangmanagements erfolgt zunächst in einer dezentralen Hardwarearchitektur, d. h. in den bereits vorhandenen Steuereinrichtungen des Antriebsstrangs. Diese Funktions- und Softwarearchitektur unterstützt aber auch eine Verteilung der Funktionen auf andere Rechner bzw. Recheneinheiten oder Steuereinrichtungen im Fahrzeug. Die Schnittstellen I302 bis I313 sowie I3145 und I316 können dabei erfindungsgemäß in der offenen Schnittstellenschicht 204 aus Figur 2 zusammengefasst werden. Die Koordinatoren für die Fahrzeugbewegung K1, das Gesamtfahrzeug K2 und den Antriebsstrang K3 sind in der Systemschicht SL enthalten. Durch die genannten offenen Standardschnittstellen können dann einfach Funktionen durch die Systemschicht von den Steuereinheiten bzw. steuereinrichtungsspezifische Funktionen, den Basisfunktionen BaF aufgesetzt werden. Solche Betriebsfunktionen betreffen beispielsweise mechanisches, thermisches und/oder elektrisches Energiemanagement 308, Navigation 309, Fahrzeugführung 310, Klimaregelung 307 und Generatormanagement 306 sowie übrige über den Koordinator K2 koordinierte Funktionalitäten, für welche als Platzhalter Element 311 dargestellt ist. Gleiches gilt bezogen auf den Koordinator K3 Antriebsstrang für koordinierte Antriebsstrangsteuerung 302, Kupplungsmanagement 303, Getriebesteuerung 304 und das Startermanagement 305. Bezogen auf die Fahrzeugbewegung, Koordinator K1 sind hier ACC (Adaptive Cruise Control) 312, Fahrerwunsch 313, ESP 314, Bremsregelung 315 und als Platzhalter für weitere Optionen Element 316 vorzusehen. Dabei erhält ESP 314 und die Bremsregelung 315 z.B. eine gemeinsame Schnittstelle I3145.

Ebenso können Betriebsfunktionen untereinander Verbindungen aufweisen, wie dies beim Startermanagement 305 und dem Generatormanagement 306 der Fall ist.

Die vorgestellte Erfindung ermöglich somit eine optimierte modulare Umsetzung vorhandener und neuer Fahrzeugfunktionen. Die konsequente erfindungsgemäße Implementierung erzeugt ein offenes und modulares elektronisches System für das Fahrzeug, welches langfristige Erweiterbarkeit auch hinsichtlich neuer elektronischer Fahrzeugsysteme und Fahrzeugteilsysteme sicherstellt.

## Patentansprüche

1. Elektronisches System (200) für ein Fahrzeug, welches aus
- ersten Komponenten zur Durchführung von Steuerungsaufgaben bei Betriebsabläufen und
- zweiten Komponenten, (K1-K3) die ein Zusammenwirken der ersten Komponenten zur Durchführung der Steuerungsaufgaben koordinieren, besteht,
- wobei die ersten Komponenten die Steuerungsaufgaben durch Verwendung von Betriebsfunktionen (F1-F6) und Basisfunktionen (BaF) durchführen,
**dadurch gekennzeichnet, dass** das System (200) derart aufgebaut ist, dass eine Systemschicht (203) aufsetzend auf den Basisfunktionen (BaF) enthalten ist, welche wenigstens zwei der zweiten Komponenten (K1-K3) umfasst, wobei ebenfalls wenigstens eine offene Schnittstelle (204) der Systemschicht (203) zu den Betriebsfunktionen (F1-F6) vorgesehen ist und die Systemschicht (203) die Basisfunktionen (BaF) mit beliebigen Betriebsfunktionen (F1-F6) derart verbindet, dass die Betriebsfunktionen (F1-F6) modular eingebunden und/oder verwendet werden können.

2. Elektronisches System nach Anspruch 1, **dadurch gekennzeichnet, dass** zusätzlich Überwachungsfunktionen bezüglich der Betriebsfunktionen (F1-F6) in der Systemschicht (203) eingebunden sind.

3. Elektronisches System nach Anspruch 1, **dadurch gekennzeichnet, dass** die Basisfunktionen (BaF) in einer Basisschicht (202) zusammengefasst sind.

4. Elektronisches System nach Anspruch 1, wobei als zweite Komponenten für Steuerungsaufgaben wenigstens solche bezüglich Gesamtfahrzeug, Fahrzeugbewegung und Antriebsstrang enthalten sind, **dadurch gekennzeichnet, dass** die Systemschicht (203) von den zweiten Komponenten wenigstens die bezüglich Gesamtfahrzeug und Antriebsstrang und/oder Fahrzeugbewegung umfasst.

5. Elektronisches System nach Anspruch 1, **dadurch gekennzeichnet, dass** die Betriebsfunktionen (F1-F6) vor und/oder während einer Compilierung und/oder vor und/oder während der Durchführung der Steuerungsaufgaben modular eingebunden werden.

6. Systemschicht eines elektronischen Systems (200) eines Fahrzeugs nach Anspruch 1 **dadurch gekennzeichnet, dass** die Systemschicht die Betriebsfunktionen (F1-F6) über die wenigstens eine offene Schnittstelle (204) mit den Basisfunktionen (BaF) derart verknüpft, dass die Betriebsfunktionen (F1-F6) modular an das elektronische System (200) angebunden und/oder in das elektronische System (200) eingebunden werden können.

7. Systemschicht nach Anspruch 6, **dadurch gekennzeichnet, dass** zusätzlich Überwachungsfunktionen bezüglich der Betriebsfunktionen (F1-F6) eingebunden sind.

8. Systemschicht nach Anspruch 6, **dadurch gekennzeichnet, dass** diese von den zweiten Komponenten wenigstens solche umfasst, welche das Zusammenwirken der ersten Komponenten wenigstens bezüglich Gesamtfahrzeug und Antriebsstrang und/oder Fahrzeugbewegung koordinieren.

## Claims

1. Electronic system (200) for a vehicle which is composed of
- first components for carrying out control tasks during operating sequences and
- second components (K1-K3) which coordinate interaction between the first components in order to carry out the control tasks,
- the first components carrying out the control tasks by using operating functions (F1-F6) and basic functions (BaF),
**characterized in that** the system (200) is constructed in such a way that a system layer (203) is included which is based on the basic functions (BaF) and which comprises at least two of the second components (K1-K3), at least one open interface (204) between the system layer (203) and the operating functions (F1-F6) being also provided, and the system layer (203) connecting the basic functions (BaF) to any desired operating functions (F1-F6) in such a way that the operating functions (F1-F6) can be integrated and/or used in a modular fashion.

2. Electronic system according to Claim 1, **characterized in that** motoring functions relating to the operating functions (F1-F6) in the system layer (203) are additionally integrated.

3. Electronic system according to Claim 1, **characterized in that** the basic functions (BaF) are combined in a basic layer (202).

4. Electronic system according to Claim 1, in which, as second components for control tasks, at least those which relate to the entire vehicle, the movement of the vehicle and the drive train are included, **characterized in that** the system layer (203) of the second components comprises at least those which relate to the entire vehicle and drive train and/or movement of the vehicle.

5. Electronic system according to Claim 1, **characterized in that** the operating functions (F1-F6) are included in a modular fashion before and/or during compilation and/or before and/or during the execution of the control tasks.

6. System layer of an electronic system (200) of a vehicle according to Claim 1, **characterized in that** the system layer links the operating functions (F1-F6) to the basic functions (BaF) by means of the at least one open interface (204) in such a way that the operating functions (F1-F6) are linked to the electronic system (200), and/or can be integrated into the electronic system (200), in a modular fashion.

7. System layer according to Claim 6, **characterized in that** monitoring functions relating to the operating functions (F1-F6) are additionally integrated.

8. System layer according to Claim 6, **characterized in that**, of the second components, it includes at least those which coordinate the interaction of the first components at least in relation to the entire vehicle and the drive train and/or the movement of the vehicle.

## Revendications

1. Système électronique (200) pour un véhicule, comportant
- des premiers composants destinés à exécuter des tâches de commande lors de déroulements opératoires, et
- des deuxièmes composants (K1 à K3) qui coordonnent une interaction avec les premiers composants destinés à exécuter des tâches de commande,
les premiers composants exécutant les tâches de commande en utilisant des fonctions opératoires (F1 à F6) et des fonctions de base (BaF),
**caractérisé en ce que**
le système (200) est conçu de telle manière qu'il contient une couche de système (203) superposée aux fonctions de base (BaF) et comportant au moins deux des deuxièmes composants (K1 à K3), au moins une interface (204) ouverte de la couche de système (203) étant également prévue vers les fonctions opératoires (F1 à F6), et
la couche de système (203) relie les fonctions de base (BaF) à des fonctions opératoires (F1 à F6) quelconques de telle manière que les fonctions opératoires (F1 à F6) peuvent intervenir et/ou être utilisées sous forme modulaire.

2. Système électronique selon la revendication 1,
**caractérisé en ce que**
des fonctions de surveillance relatives aux fonctions opératoires (F1 à F6) interviennent dans la couche de système (203).

3. Système électronique selon la revendication 1,
**caractérisé en ce que**
les fonctions de base (BaF) sont rassemblées dans une couche de base (202).

4. Système électronique selon la revendication 1, dans lequel les deuxièmes composants destinés à des tâches de commande sont au moins ceux pour l'ensemble du véhicule, le mouvement du véhicule et la ligne de transmission,
**caractérisé en ce que**
la couche de système (203) contient au moins les deuxièmes composants qui servent à l'ensemble du véhicule et à la ligne de transmission et/ou au mouvement du véhicule.

5. Système électronique selon la revendication 1,
**caractérisé en ce que**
les fonctions opératoires (F1 à F6) interviennent sous forme modulaire avant et/ou pendant une compilation, et/ou avant et/ou pendant que les tâches de commande sont exécutées.

6. Couche de système d'un système électronique (200) d'un véhicule d'après la revendication 1,
**caractérisée en ce que**
la couche de système relie, par l'intermédiaire de l'au moins une interface (204) ouverte, les fonctions opératoires (F1 à F6) aux fonctions de base (BaF) de telle manière que les fonctions opératoires (F1 à F6) peuvent être rattachées au système électronique (200) et/ou intervenir dans le système électronique (200).

7. Couche de système selon la revendication 6,
**caractérisée en ce que**
interviennent en outre des fonctions de surveillance relatives aux fonctions opératoires (F1 à F6).

8. Couche de système selon la revendication 6,
**caractérisée en ce qu'**
elle comprend au moins les deuxièmes composants qui coordonnent l'interaction des premiers composants, au moins relativement à l'ensemble du véhicule et à la ligne de transmission et/ou au mouvement du véhicule.
